# EUROPÄISCHE PATENTANMELDUNG

(11) **EP 4 239 294 A1**
(43) Veröffentlichungstag der Anmeldung: **06.09.2023**
(21) Anmeldenummer: 23159020.9
(22) Anmeldetag: 28.02.2023
(51) Int. Cl.: G01C 25/00

(54) **VERFAHREN ZUR KALIBRIERUNG EINES PORTABLEN REFERENZSENSORSYSTEMS, PORTABLES REFERENZSENSORSYSTEM UND VERWENDUNG DES PORTABLEN REFERENZSENSORSYSTEMS**

(30) Priorität: 02.03.2022 DE 102022104880
(71) Anmelder: AVL Software And Functions GmbH, 93059 Regensburg (DE)
(72) Erfinder: Engstle, Armin, 93059 Regensburg (DE); Turrado Blanco, Diego, 93059 Regensburg (DE)
(74) Vertreter: Hannke, Christian

(57) **Zusammenfassung**

Verfahren zur Kalibrierung eines portablen Referenzsensorsystems mit optischen Sensoren und zumindest einen Positionssensor, umfassend die Verfahrensschritte
a) Kalibration der optischen Sensoren des Referenzsensorsystems auf ein vorbestimmtes Referenz-Koordinatensystem durch Bestimmen einer Rotations- und/oder Translationsmatrix jedes Sensors, so dass ein Koordinatensystem jedes Sensors zu dem Referenz-Koordinatensystem kalibriert ist, wobei durch ein Erkennen von externen Kalibrierobjekten die jeweiligen Rotations- und/oder Translationsmatrizen bestimmt werden;
b) Kalibration des Positionssensors auf das Referenz-Koordinatensystem durch Erkennen von Positionsmarkern, wodurch eine Kalibration eines Koordinatensystems des Positionssensors zu einem Fahrzeug-Koordinatensystem durchgeführt wird durch Bestimmung einer Rotations- und/oder Translationsmatrix.

## Beschreibung

Die Erfindung betrifft ein Verfahren zur Kalibrierung eines portablen Referenzsensorsystems mit optischen Sensoren und zumindest einem Positionssensor. Die Erfindung betrifft weiterhin ein kalibriertes Referenzsensorsystem und die Verwendung des kalibrierten Referenzsensorsystems.

Die statistische Auswertung großer Mengen repräsentativer Realfahrdaten zur Bewertung der Leistungsfähigkeit von Fahrerassistenzsystem (ADAS)-Sensoren und deren Algorithmen wird umso entscheidender, je höher der Automatisierungsgrad (SAE-Level 0 bis 5) eines Fahrzeugs ist. Dabei ist der objektive Vergleich der Sensorsignale gegen eine absolute Umgebungsreferenz die einzige Möglichkeit, eine kosteneffiziente und verlässliche Sensorikentwicklung und -validierung zu realisieren. Herstellerunabhängige, standardisierte Referenzsensorsysteme sind gleichwohl eine Grundvoraussetzung für die Homologation/ Typprüfung zukünftiger automatisierter Fahrzeuge, da die entsprechenden Zertifizierungsbehörden ihre Bewertung immer auf ein eigenes Umgebungsbild stützen werden. US-Firmen wie Waymo und Uber, die den technologischen Schritt zum autonomen Fahren als entscheidenden Bestandteil ihres Geschäftsmodells verstehen, verfolgen konsequent den Ansatz einer datengetriebenen Entwicklung zur kontinuierlichen Verbesserung und Optimierung ihrer Produkte. Jede Weiterentwicklung, jede neue Iterationsstufe der Produkte wird stetig gegen die vorhandene Datenbasis getestet und auf Basis der daraus generierten Analyseergebnisse kontinuierlich optimiert.

Entscheidend für das autonome Fahren von Fahrzeugen sind die Fahrzeugsensoren bzw. das Fahrzeugsensorsystem, das dazu in der Lage ist, die statische und dynamische Umgebung eines Fahrzeuges zu erfassen, zu verstehen und zu rekonstruieren. Jeder Fahrzeugsensor des Fahrzeugsensorsystems verwendet dazu sein eigenes Koordinatensystem, in dem zumindest ein Ausschnitt der Umgebung im jeweiligen Erfassungsbereich des Sensors erfasst wird. Um die gesamte Fahrzeugumgebung rekonstruieren zu können und um eine geometrische Beziehung zwischen den jeweiligen Koordinatensystemen der Sensoren herstellen zu können, ist es erforderlich, dass die relativen Positionen zwischen allen Sensoren des Fahrzeugsensorsystems und dem Fahrzeug bestimmt und kalibriert sind.

Zur Entwicklung, Kalibrierung und Validierung von Fahrzeugsensorsystemen bzw. von Fahrzeugen, die ein Fahrzeugsensorsystem umfassen, wird im Stand der Technik ein für alle Fahrzeuge einheitliches, portables Referenzsensorsystem verwendet. Zunächst wird ein beliebiges Fahrzeug mit dem Referenzsensorsystem ausgestattet. Um die Sensorsignale des Fahrzeugsensorsystems mit den Sensorsignalen des Referenzsensorsystems vergleichen zu können, ist es im folgenden Schritt notwendig, das Referenzsensorsystem auf das Fahrzeug zu kalibrieren bzw. die Position des portablen Referenzsensorsystems gegenüber dem Fahrzeug zu bestimmen. Im bisherigen Stand der Technik wird hierfür eine externe Kalibriervorrichtung verwendet, beispielsweise ein Motion Capture System. Die Nachteile einer Kalibrierung mittels einer externen Kalibriereinrichtung ist, dass die Kalibrierung langwierig und zeitaufwendig ist. Gerade bei großen Fahrzeugflotten, die nötig sind, um die benötigte Menge an Sensordaten im Fahrbetrieb in unterschiedlichsten Fahrzeugumgebungen (klimatische Verhältnisse, Wetter, Straßenverhältnisse, Verkehrslagen, etc.) zu generieren, macht das Management einer groß angelegten Messreihe besonders schwierig. Gerade das portable Referenzsensorsystem und die externe Kalibriervorrichtung stellen hierbei die limitierenden Ressourcen dar. Sind alle Sensoren des Fahrzeugsensorsystems und alle Sensoren des Referenzsensorsystems aufeinander kalibriert bzw. die jeweiligen Positionen zueinander bekannt, können die jeweiligen Sensordaten erfasst und miteinander verglichen werden.

Wird das Referenzsensorsystem vom Fahrzeug demontiert und zu einem späteren Zeitpunkt erneut an das Fahrzeug montiert, muss auch erneut das Referenzsensorsystem auf das Fahrzeug mittels der externen Kalibriervorrichtung kalibriert werden, um die erforderlichen Messtoleranzen in der Größenordnung von Millimetern bezüglich einer Verschiebung bzw. Zehntel Grad bezüglich einer Rotation einhalten zu können. In der Praxis bedeutet das, dass dieses Fahrzeug erneut zur externen Kalibriereinrichtung gebracht werden muss, um das Referenzsensorsystem auf das Fahrzeug zu kalibrieren. Dies macht das Kalibrierverfahren weiter zeitaufwendig und teuer. Ein weiterer Nachteil ist, dass zur Kalibrierung des Referenzsensorsystems auf das Fahrzeug mittels der externen Kalibriervorrichtung das Fahrzeug mit dem Referenzsensorsystem ausgerüstet sein muss, sodass dieses Referenzsensorsystem zeitgleich nicht anderweitig, beispielsweise für die Erfassung von Sensordaten im Fahrbetrieb zur Verfügung steht.

Es ist daher die Aufgabe der vorliegenden Erfindung, ein Verfahren bereitzustellen, das die Nachteile des Verfahrens zur Positionsbestimmung des portablen Referenzsensorsystem gegenüber einem Fahrzeug im bisherigen Stand der Technik überwindet.

Diese Aufgabe wird durch ein Verfahren mit den Merkmalen des Patentanspruches 1 gelöst. Vorteilhafte Ausführungsformen ergeben sich aus den Unteransprüchen.

Kerngedanke der Erfindung ist Verfahren zur Kalibrierung eines portablen Referenzsensorsystems mit optischen Sensoren und zumindest einen Positionssensor, umfassend die Verfahrensschritte:
a) Kalibration der optischen Sensoren des Referenzsensorsystems auf ein vorbestimmtes Referenz-Koordinatensystem durch Bestimmen einer Rotations- und/oder Translationsmatrix jedes Sensors, so dass ein Koordinatensystem jedes Sensors zu dem Referenz-Koordinatensystem kalibriert ist, wobei durch ein Erkennen von externen Kalibrierobjekten die jeweiligen Rotations- und/oder Translationsmatrizen bestimmt werden;
b) Kalibration des Positionssensors auf das Referenz-Koordinatensystem durch Erkennen von Positionsmarkern, wodurch eine Kalibration eines Koordinatensystems des Positionssensors zu einem Fahrzeug-Koordinatensystem durchgeführt wird durch Bestimmung einer Rotations- und/oder Translationsmatrix.

Die optischen Sensoren können Kameras und mehrere LIDAR-Sensoren sein. Bevorzugt ist weiter, dass der zumindest eine Positionssensor ein dGPS oder GNSS ist. Besonders bevorzugt ist der mindestens eine Positionssensor Teil eines Positionssystems.

Gemäß einer bevorzugten Ausführungsform ist das Referenz-Koordinatensystem des Referenzsensorsystems ausgebildet durch einen zentralen LIDAR-Sensor. Das heißt, dass alle weiteren Sensoren auf das Referenz-Koordinatensystem des zentralen LIDAR-Sensors kalibriert werden.

Das Fahrzeug verfügt über sein eigenes Koordinatensystem, dessen Nullpunkt üblicherweise in der Mitte der Hinterachse des Fahrzeuges definiert ist. Das Koordinatensystem des Fahrzeuges ist üblicherweise so gerichtet, dass die drei Achsen in eine Vorwärtsrichtung, in eine Höhenrichtung und in eine Seitenrichtung gerichtet sind, die jeweils zueinander orthogonal sind.

Üblicherweise sind die drei Achsen des Referenzsensorsystems in eine Vorwärtsrichtung, in eine Höhenrichtung und in eine Seitenrichtung des Referenzsensorsystems gerichtet. Um die Position des Referenzsensorsystems gegenüber dem Fahrzeug zu bestimmen, ist es insbesondere erforderlich, eine Verschiebung bzw. Translation (beispielsweise mittels eines Vektors) des Nullpunktes des Koordinatensystems des Referenzsensorsystems zum Nullpunkt des Koordinatensystems des Fahrzeuges zu bestimmen, insbesondere auf den Millimeter genau. Zudem ist es erforderlich, eine Rotation des Koordinatensystems des Referenzsensorsystems zum Koordinatensystem des Fahrzeuges zu bestimmen. Idealerweise weisen die beiden Koordinatensysteme keine Rotation zueinander auf, jedoch sind kleine Abweichungen möglich, wobei es erforderlich ist, Abweichungen in der Größenordnung von einem Zehntel Grad zu bestimmen.

Eine Abweichung zwischen dem Referenz-Koordinatensystem und dem Fahrzeug-Koordinatensystem hinsichtlich eines Winkelfehlers ist der kritisch zu betrachtende Fehler, da dieser Fehler mit der Entfernung skaliert. Ein Fehler von 1° zwischen Referenz-Koordinatensystem und dem Fahrzeug-Koordinatensystem bedeutet auf eine Entfernung von 100 Metern eine laterale Abweichung von 1,75 Meter.

Als Anforderung wird daher ein maximaler Winkelfehler von höchstens 0,2° als akzeptabel angesehen.

Nach der erfindungsgemäßen Durchführung des Verfahrens zur Kalibrierung des portablen Referenzsensorsystems, kann das Referenzsensorsystem transportiert werden und kann nun unabhängig von dem während des Verfahrens verwendeten Fahrzeugs an einem beliebigen Fahrzeug verwendet werden, ohne nachmalige Kalibrierung auf das nun verwendete Fahrzeug. Dadurch ist es möglich, dass nur das portable Referenzsensorsystem zu dem jeweiligen Einsatzort gebracht werden muss, ohne weiter auf eine Kalibrierhalle oder eine externe Kalibrierung angewiesen zu sein. Hierauf wird im späteren Verlauf der Beschreibung nochmals im Detail Bezug genommen.

Bevorzugt können die externen Kalibrierobjekte ein Muster bzw. Kalibriermuster aufweisen, beispielsweise ein Schachbrettmuster oder dergleichen. Weiter bevorzugt sind die externen Kalibrierobjekte ortsfest angeordnet, beispielsweise innerhalb einer Halle bzw. Kalibrationshalle.

Gemäß einer bevorzugten Ausführungsform ist ein Kalibriermuster des Kalibrierobjektes definiert. Insbesondere bedeutet das, dass Informationen über die Geometrie des Kalibriermusters vorliegen bzw. abrufbar sind. Weiter sind insbesondere Maße wie Längen und Winkel des Kalibriermusters bzw. Koordinaten markanter Punkte des Kalibriermusters im Koordinatensystem des Kalibrierobjektes bekannt und dem Verfahren als Information zugrunde gelegt. Bevorzugt ist das Kalibriermuster, insbesondere die markanten Punkte, besonders leicht durch das Referenzsensorsystem zu erkennen. Dies wird beispielsweise durch hohe Farbkontraste und scharfe Farbkanten erzielt.

Bevorzugt ist das Kalibriermuster, ein einfaches bzw. sich wiederholendes Muster. Weiter bevorzugt ist das Kalibriermuster, ein Schachbrettmuster oder ein Punktmuster. Es kann darüber hinaus jedes andere Muster verwendet werden, das sich als besonders geeignet für das Verfahren erweist.

Gemäß einer besonders bevorzugten Ausführungsform ist es vorgesehen, dass beim Schritt der Kalibration der optischen Sensoren das Referenzsensorsystem durch Translationsbewegungen und/oder Rotationsbewegungen relativ zu den Kalibrierobjekten bewegt wird, so dass die Kalibrierobjekte durch die optischen Sensoren erkannt werden können. Die optischen Sensoren sind besonders bevorzugte Kameras.

Zur leichteren Relativbewegung kann es bevorzugt vorgesehen sein, dass das Referenzsensorsystem nicht auf dem Fahrzeug montiert ist, sondern beispielsweise auf einem Tisch angeordnet ist und der Tisch mit dem Referenzsensorsystem relativ zu den Kalibrierobjekten bewegt wird.

Gemäß einer weiterführenden bevorzugten Ausführungsform kann es vorgesehen sein, dass für jedes erkanntes Kalibrierobjekt jeweils ein Normalenvektor des Kalibrierobjekts erzeugt wird, wodurch die jeweilige Rotations- und/oder Translationsmatrix erzeugt wird.

Die jeweilige erzeugte Rotations- und/oder Translationsmatrix kalibriert den jeweiligen Sensor hinsichtlich des Referenz-Koordinatensystems, welches beispielsweise durch den zentralen LI DAR-Sensor angegeben ist.

Hierdurch können alle Sensoren des Referenzsensorsystems auf das Referenz-Koordinatensystem kalibriert werden, mittels Bestimmung der entsprechenden Rotations- und/oder Translationsmatrix. Bevorzugt wird dabei der Sensor, der das Referenz-Koordinatensystem vorgibt, nicht auf sich selbst kalibriert, da dieser das Referenz-Koordinatensystem vorgibt.

Gemäß einer weiterführenden Ausführungsform ist es vorgesehen, dass vor dem Verfahrensschritt a) die optischen Sensoren, welche durch Kameras gegeben sind, derart kalibriert werden, dass Verzerrungseffekte der jeweiligen Linsen bzw. Kameralinsen behoben werden.

Besonders bevorzugt wird mittels einer Kalibrationsroutine des Referenzsensorsystems die spezifische Brennweite der jeweiligen Kameralinse bestimmt, besonders bevorzugt unter Berücksichtigung der Fertigungstoleranzen. Die spezifische Brennweite wird bei Erzeugung eines Kamerabilds berücksichtigt.

Gemäß einer weiterführenden bevorzugten Ausführungsform kann es vorgesehen sein, dass nach der Kalibration der optischen Sensoren und vor der Kalibration des Positionssensors das Referenzsensorsystem auf ein Fahrzeug montiert wird.

Erfindungsgemäß ist es vorgesehen, dass ein Bezug zu dem Fahrzeug-Koordinatensystem vorgesehen ist, so dass, wenn das Referenzsensorsystem noch nicht auf dem Fahrzeug montiert wäre, dieses in Relation zu dem Fahrzeug gesetzt werden muss.

Wäre das Referenzsensorsystem bereits im Verfahrensschritt a) auf dem Fahrzeug montiert, könnte der Montageschritt entfallen.

Erfindungsgemäß ist es zur Kalibrierung des Positionssensors vorgesehen, dass die Kalibration des Positionssensors auf das Referenz-Koordinatensystem durch Erkennen von Positionsmarkern durchgeführt wird, wodurch eine Kalibration eines Koordinatensystems des Positionssensors zu einem Fahrzeug-Koordinatensystem durchgeführt wird durch Bestimmung einer Rotations- und/oder Translationsmatrix.

Gemäß einer besonders bevorzugten Ausführungsform kann es vorgesehen sein, dass bei der Kalibrierung des Positionssensors Positionsmarker auf den Kalibrierobjekten und auf einer Hinterachse des Fahrzeugs erkannt werden, und wobei die Position der Kalibrierobjekte zu dem Referenzsensorsystem bestimmt wird, wodurch die Position der Kalibrierobjekte zu der Hinterachse bestimmt wird, wodurch die Rotations- und/oder Translationsmatrix des Referenzsensorsystems zu dem Fahrzeug-Koordinatensystem bestimmt wird.

Die Kalibration des Positionssensors bzw. des Positionssystems, beispielsweise eines GNSS-Systems, zu dem Referenz-Koordinatensystems, beispielsweise gegeben durch den zentralen LIDAR, ist der schwierigste Abschnitt der erfindungsgemäßen Kalibrationsroutine, da eine direkte optische Messung nicht zur Verfügung steht.

Der im Folgenden beschriebene, mehrstufige Kalibrationsprozess wird in einer Kalibrationshalle über einen Umweg der extrinsischen Referenz-Koordinatensystem zu Fahrzeug-Koordinatensystem-Kalibration realisiert, weshalb das Referenzsensorsystem für diesen Kalibrationsschritt auf ein Fahrzeug montiert wird bzw. ist.

Besonders bevorzugt können die Positionsmarker mittels eines externen Kamerasystems erkannt werden. Beispielsweise kann das externe Kamerasystem in der Halle montiert bzw. angeordnet sein. Besonders bevorzugt handelt es sich bei dem externen Kamerasystem um ein 3D-Kamerasystem.

Positionsmarker, welche von dem externen Kamerasystem präzise erkannt werden, sind auf der Hinterachse bzw. der Radnabe des Fahrzeugs montiert, wobei die Hinterachse bzw. die Radnabe dem Fahrzeug-Koordinatensystem entspricht, sowie auf den Kalibrierobjekten angebracht. Durch den zentralen LIDAR wird die relative Position des zentralen LIDAR zu Kalibrierobjekt erkannt. Das externe Kamerasystem bestimmt die Position der Kalibrierobjekte zu dem Fahrzeug-Koordinatensystem. Hierdurch ist es möglich, die Rotations- und/oder Translationsmatrix für die extrinsische Kalibration Referenzsensorsystem zu Fahrzeug durchzuführen.

Mit Hilfe einer internen Kalibrationsroutine des Positionssystems wird die Rotationsmatrix zwischen dem Positionssystem und der Hinterachse, also dem Fahrzeug-Koordinatensystem, bestimmt.

Es wird bevorzugt ein vom Hersteller des Positionssystems vorgegebene Bewegungsmuster unter freiem Himmel nachgefahren. Nach mehrmaligem Abfahren dieses Bewegungsmusters kann der so bestimmte Winkelversatz mit 0,05 - 0,1° nach Herstellerangabe angegeben werden. Die Translationsmatrix zwischen dem Positionssystem und dem Fahrzeug-Koordinatensystem wird durch das externe Kamerasystem bzw. einen auf einem Gehäuse des Positionssystems platzierten Marker bestimmt.

Weiter wird die zugrunde liegende Aufgabe gelöst durch das kalibrierte Referenzsensorsystem, welches mittels des erfindungsgemäßen Verfahrens kalibriert ist.

Weiter wird die zugrunde liegende Aufgabe gelöst durch eine Verwendung des kalibrierten Referenzsensorsystems mit einem beliebigen Fahrzeug. Unter einem beliebigen Fahrzeug ist jedes andere Fahrzeug als das Fahrzeug gemeint, welches gemäß dem Verfahren verwendet wurde.

Wenngleich die extrinsische Kalibration des Referenzsensorsystems zum Fahrzeug bereits erläutert wurde, ergibt sich für die Verwendung des kalibrierten Referenzsensorsystems für ein beliebiges Fahrzeug eine spezielle Herausforderung. Da ein Kalibrationsprüfstand bzw. eine Kalibrationshalle nicht überall zur Verfügung steht, ist die extrinsische Kalibration des Referenzsensorsystems auf das (beliebige) Fahrzeug auf anderen Wegen darzustellen, um den Wechsel des Referenzsensorsystems von einem auf ein anderes Fahrzeug auch vor Ort ohne Halle zu ermöglichen.

Hierzu wird der beschriebene Weg der Kalibrierung in einer umgekehrten Richtung durchlaufen wie das Verfahren der Kalibration des Referenzsensorsystems.

Da die Orientierung des Positionssystems bzw. die entsprechende Rotations- und Translationsmatrix zu dem Referenz-Koordinatensystem, beispielsweise dem zentralen LIDAR, bekannt ist, wird nach jedem Fahrzeugwechsel die Rotationsmatrix des Positionssystems zu der Fahrzeughinterachse bzw. dem Referenz-Koordinatensystem des nun verwendeten Fahrzeugs mithilfe der Kalibrationsroutine des Positionssystems ermittelt.

Aufgrund des vergleichsweise geringen Fehlereinflusses der Translationsmatrix, kann der dreidimensionale Abstand des Positionssystems zu der Hinterachse des beliebigen Fahrzeugs gemessen werden, beispielsweise mit Hilfe eines Meterstabes oder eines Kontaktmessarms.

Durch die formale Kombination der bekannten extrinsischen Kalibration des Referenzsensorsystems, das heißt Positionssystem zu Referenz-Koordinatensystem, und der Kalibration des Positionssystems zu der Hinterachse, kann die extrinsische Kalibration Referenz-Koordinatensystem zu dem Fahrzeug bzw. der Fahrzeughinterachse berechnet werden.

Gemäß einer besonders bevorzugten Ausführungsform kann es vorgesehen sein, dass das kalibrierte Referenzsensorsystem auf dem beliebigen Fahrzeug angebracht wird und wobei nach Anbringung des Referenzsensorsystems mittels des Positionssensors eine Rotationsmatrix des Positionssensors zu einer Hinterachse des beliebigen Fahrzeugs bestimmt wird und die Translationsmatrix des Positionssensors zu der Hinterachse des beliebigen Fahrzeugs gemessen wird.

Wie bereits ausgeführt, ist es besonders vorteilhaft vorgesehen, dass die Verwendung des Referenzsensorsystems unabhängig von externen Kalibrierobjekten und Positionsmarkern ist.

Insbesondere ist es möglich, das Referenzsensorsystem an jedem Ort ohne weitere Vorrichtungen zu nutzen unabhängig von dem vorhandenen Fahrzeug. Mit Hilfe des Verfahrens kann somit vorteilhaft das portable Referenzsensorsystem von einem Fahrzeug an ein anderes Fahrzeug in einer realen Fahrzeugumgebung, wie beispielsweise im Stadtverkehr angebracht und kalibriert werden, ohne dass das Fahrzeug mit angebrachter Referenzsensorumgebung zu einer externen Kalibriervorrichtung gefahren werden muss. Somit können Zeit und Geld für die Positionsbestimmung eingespart werden, das Management einer Testreihe vereinfacht werden und Ressourcen einer externen Kalibriervorrichtung eingespart werden.

Die Aufgabe wird weiterhin gelöst durch eine Vorrichtung. Die Vorrichtung kann dabei mit allen bereits obig im Rahmen des Verfahrens beschriebenen Merkmalen einzeln oder in Kombination miteinander ausgestattet sein und umgekehrt.

Erfindungsgemäß wird eine Vorrichtung zur Durchführung eines Verfahrens zur Kalibrierung eines portablen Referenzsensorsystems bereitgestellt, umfassend das portable Referenzsensorsystem, das an einem Fahrzeug anbringbar ist, wobei das Referenzsensorsystem optische Sensoren und zumindest einen Positionssensor umfasst.

Diese Vorrichtung ist entsprechend dazu in der Lage, das erfindungsgemäße Verfahren und die Verwendung durchzuführen.

Gemäß einer bevorzugten Ausführungsform ist das portable Referenzsensorsystem zumindest teilweise auf einem Dach eines Fahrzeuges anbringbar. Bevorzugt umfasst das Referenzsensorsystem eine Dachbox, die auf jedes handelsübliche Fahrzeugdach anbringbar ist. Insbesondere ist das Referenzsensorsystem lösbar mit dem Fahrzeug verbindbar, bevorzugt an das Fahrzeug steckbar, schraubbar, klemmbar, saugbar oder dergleichen. Bevorzugt ist die nötige Infrastruktur, beispielsweise für die Spannungsversorgung und den Datentransfer, um das Referenzsensorsystem zu betreiben, im Kofferraum des Fahrzeugs unterbringbar.

Dies hat den Vorteil, dass das Referenzsensorsystem schnell von einem Fahrzeug auf ein anderes Fahrzeug umgerüstet werden kann. Weiter ist es bei der Positionierung auf dem Dach des Fahrzeuges möglich, dass das Referenzsensorsystem einen holistischen 360°-Referenzdatensatz der Fahrzeugumgebung erzeugen kann.

Bevorzugt handelt es sich bei dem Referenzsensorsystem um das AVL Dynamic Ground Truth (DGT) System.

Gemäß einer bevorzugten Ausführungsform umfasst das portable Referenzsensorsystem optische Sensoren und zumindest einen Positionssensor bzw. ein Positionssystem. Weiter bevorzugt umfasst das Referenzsensorsystem zumindest eine Recheneinheit. Das Referenzsensorsystem umfasst weiter bevorzugt eine Speichereinheit.

Die optischen Sensoren sind bevorzugt zumindest eines ausgewählt aus der Gruppe umfassend Lidar-Sensoren, Radar-Sensoren, Kameras, Ultraschallsensoren, Infrarotsensoren, und jede Kombination daraus.

Der Positionssensor kann ein Empfänger von Signalen eines Navigationssatellitensystems sein.

Bevorzugt können erfasste Sensordaten des Referenzsensorsystems von der Recheneinheit verarbeitet und in der Speichereinheit gespeichert werden.

Der Erfassungsbereich aller Sensoreinheiten ist bevorzugt auf eine maximale Abdeckung der Fahrzeugumgebung in 360° um das Fahrzeug optimiert, um die Verwendbarkeit der Referenzdaten für möglichst alle Advanced Driver Assistance System (ADAS) Funktionen zu gewährleisten.

Gemäß einer bevorzugten Ausführungsform umfasst das Fahrzeug ein Fahrzeugsensorsystem, wobei erfasste Sensordaten des Fahrzeugsensorsystems mit erfassten Umgebungsdaten des Referenzsensorsystems der Fahrzeugumgebung verglichen werden können. Das Fahrzeugsensorsystem ist bevorzugt zumindest Teil eines Fahrerassistenzsystems (ADAS).

Insbesondere ist das Fahrzeugsensorsystem auf das Fahrzeug kalibriert, sodass dynamische und statische Objekte detektiert, klassifiziert und in Relation zum Fahrzeug positioniert werden können. Insbesondere ist der Vergleich der Sensordaten möglich, da die dritte Position des Referenzsensorsystems gegenüber dem Fahrzeug durch die Vorrichtung bestimmbar ist und somit auch dynamische und statische Objekte detektiert, klassifiziert und in Relation zum Fahrzeug positioniert werden können.

Alle in den Anmeldeunterlagen offenbarten Merkmale können in einer korrespondierenden Weise mit entsprechender Formulierung für alle Anspruchskategorien offenbart sein.

Weitere Ziele, Vorteile und Zweckmäßigkeiten der vorliegenden Erfindung, sind anhand anliegender Zeichnungen und nachfolgender Beschreibung erläutert.

Hierbei zeigen:
- Fig. 1: die grundliegenden Anforderungen an das Referenzsensorsystem;
- Fig. 2: eine Darstellung von ersten Verfahrensschritte;
- Fig. 3A: eine Darstellung von weiteren Verfahrensschritten;
- Fig. 3B: eine Verwendung bzw. ein Verfahren zur Verwendung des Referenzsensorsystems;
- Fig. 4: ein Referenzsensorsystem.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

Die Hauptanwendung eines Referenzsensorsystems 1 besteht darin, in der Entwicklungsund Validierungsphase von ADAS / AD-Sensoren und Systemen ein unabhängiges, hochgenaues Referenzbild einer Umgebung zu generieren, gegen welches das System Under Test (SUT) bzw. die Fahrzeugsensorik getestet werden kann.

Um dies zu ermöglichen, müssen die Daten der Fahrzeug-Sensorik und der Referenzsensorsystem-Sensorik einerseits zeitlich synchron aufgenommen werden, sowie örtlich im Sinne der Bezugskoordinatensysteme, einem Referenz-Koordinatensystem 7 und einem Fahrzeug-koordinatensystem 8, aufeinander abgestimmt sein.

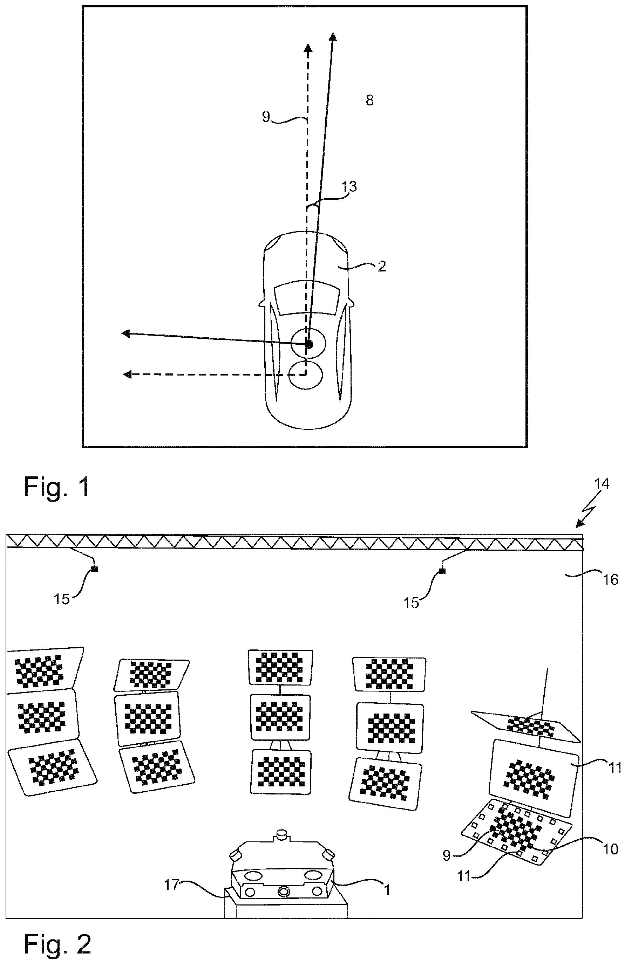

Ein Winkelversatz 13 von beispielsweise nur 1° zwischen dem Fahrzeug-Koordinatensystem 8 und dem Referenz-Koordinatensystem 7 des Referenzsensorsystems 1, führt in einer Entfernung von 100 Metern trigonometrisch zu einer lateralen Positionierungsabweichung des erkannten Objektes von ca. 1,75 Metern, wie etwa in der Figur 1 zu erkennen ist.

Als Anforderung an die extrinsische Kalibration des Referenzsensorsystems 1 wird entsprechend ein maximaler Winkelversatz 13 von höchstens 0,2° als akzeptabel definiert, welcher mit einer Positionierungsabweichung von etwa 0,35 Meter in 100 Metern Entfernung einher geht. Da der absolute translatorische Kalibrationsfehler nicht mit der Entfernung skaliert und eine Abweichung von höchstens 0,05 Meter erreicht werden kann, ist diese Anforderung vernachlässigbar.

Neben dem Genauigkeitskriterium sind weitere funktionale Anforderungen vor allem an die Aufnahme der Kalibrationsdaten während des Kalibrationsprozesses sicherzustellen:
- Hohes Maß an Wiederholbarkeit: Als Plug-and-Play Referenzsystem muss das Referenzsensorsystem 1 zum Abschluss der Produktion kalibriert werden und alle relevanten Funktionschecks durchgeführt sein. Die verwendeten Kalibrations- / Testroutinen haben prozesssicher und wiederholbar abzulaufen;
- Zeiteffiziente Durchführung der Kalibrationsdatenaufzeichnung;
- Automatisierte Erzeugung der Kalibrations- und Testberichte.

Zum Erreichen dieser Anforderungen wurde zu einem frühen Entwicklungszeitpunkt die Entscheidung für einen Kalibrationsprüfstand mit definierten externen Kalibrierobjekten 9 getroffen. Im Gegensatz zur online oder Selbstkalibrierung, ist die Genauigkeit aufgrund der bekannten Kalibriermuster 10 sowie der definierten Positionen der Kalibrierobjekte 9 genauer und überprüfbarer. Bevorzugt überwacht ein Monitoringalgorithmus zusätzlich die Güte der Sensorkalibration im Feld bzw. während des Flottentests.

Das Fahrzeug-Koordinatensystem 9 des Fahrzeuges 1 hat bevorzugt seinen Ursprung in der Mitte einer Hinterachse 12 des Fahrzeuges 2. Die Achsen des Fahrzeug-Koordinatensystems 9 sind so gerichtet, dass diese Achsen in eine Vorwärtsrichtung, in eine Höhenrichtung und in eine Seitenrichtung gerichtet sind, die jeweils zueinander orthogonal sind. Das Referenz-Koordinatensystem 8 des Referenzsensorsystems 1, welches in dieser Darstellung beispielsweise seinen Ursprung in einem festgelegten Sensor hat, beispielsweise den zentralen LIDAR 5, sind in der Fig. 1 ebenfalls dargestellt.

Um das Referenz-Koordinatensystem 8 und das Fahrzeug-Koordinatensystem 9 aufeinander kalibrieren zu können, ist es zunächst notwendig, das Referenzsensorsystem 1 zu kalibrieren.

Erfindungsgemäß ist es vorgesehen, dass ein Verfahren zur Kalibrierung eines portablen Referenzsensorsystems 1 mit optischen Sensoren 3 und zumindest einen Positionssensor 6 durchgeführt wird, umfassend die Verfahrensschritte:
a) Kalibration der optischen Sensoren 3 des Referenzsensorsystems 1 auf ein vorbestimmtes Referenz-Koordinatensystem 7 durch Bestimmen einer Rotations- und/oder Translationsmatrix jedes Sensors 3, 6, so dass ein Koordinatensystem jedes Sensors zu dem Referenz-Koordinatensystem 7 kalibriert ist, wobei durch ein Erkennen von externen Kalibrierobjekten 9 die jeweiligen Rotations- und/oder Translationsmatrizen bestimmt werden;
b) Kalibration des Positionssensors 6 auf das Referenz-Koordinatensystem 7 durch Erkennen von Positionsmarkern 11, wodurch eine Kalibration eines Koordinatensystems des Positionssensors 6 zu einem Fahrzeug-Koordinatensystem 8 durchgeführt wird durch Bestimmung einer Rotations- und/oder Translationsmatrix.

Der Verfahrensschritt a) ist beispielhaft in der Figur 2 dargestellt, wobei das Referenzsensorsystem 1 in einer Kalibrationshalle 16 angeordnet ist, bevorzugt auf einem fahrbaren Tisch 17. Weiter sind eine Vielzahl an externen Kalibrierobjekten 9 mit Kalibriermustern 10 in der Kalibrationshalle 16 angeordnet.

Gemäß einer besonders bevorzugten Ausführungsform ist es vorgesehen, dass beim Schritt der Kalibration der optischen Sensoren 3 das Referenzsensorsystem 1 durch Translationsbewegungen und/oder Rotationsbewegungen relativ zu den Kalibrierobjekten bewegt wird, so dass die Kalibrierobjekte 9 durch die optischen Sensoren 3 erkannt werden können. Die optischen Sensoren 3 sind besonders bevorzugte Kameras 4. Eine Rotations- und/oder Translationsbewegung des Referenzsensorsystems 1 kann durch entsprechendes Bewegen des Tisches 17 durchgeführt werden.

Zur leichteren Relativbewegung kann es eben bevorzugt vorgesehen sein, dass das Referenzsensorsystem 1 nicht auf dem Fahrzeug 2 montiert ist, sondern beispielsweise auf einem Tisch 17 angeordnet ist und der Tisch 17 mit dem Referenzsensorsystem 1 relativ zu den Kalibrierobjekten 9 bewegt wird.

Gemäß einer weiterführenden bevorzugten Ausführungsform kann es vorgesehen sein, dass für jedes erkanntes Kalibrierobjekt 9 jeweils ein Normalenvektor des Kalibrierobjekts 9 erzeugt wird, wodurch die jeweilige Rotations- und/oder Translationsmatrix erzeugt wird.

Die jeweilige erzeugte Rotations- und/oder Translationsmatrix kalibriert den jeweiligen optischen Sensor 3 hinsichtlich des Referenz-Koordinatensystems 7, welches beispielsweise durch den zentralen LI DAR-Sensor 5' angegeben ist.

Hierdurch können alle optischen Sensoren 3 des Referenzsensorsystems 1 auf das Referenz-Koordinatensystem 7 kalibriert werden, mittels Bestimmung der entsprechenden Rotations- und/oder Translationsmatrix. Bevorzugt wird dabei der Sensor, der das Referenz-Koordinatensystem 7 vorgibt, nicht auf sich selbst kalibriert, da dieser das Referenz-Koordinatensystem 7 vorgibt.

Hierdurch sind nun alle optischen Sensoren 3 des Referenzsensorsystems 1 auf das Referenz-Koordinatensystem kalibriert.

Im Verfahrensschritt b) wird der Positionssensor 6 bzw. des Positionssystem 6 auf das Referenz-Koordinatensystem 7 kalibriert. Da jedoch hierzu keine optische Kalibrierung zur Verfügung steht, ist eine mehrstufige Kalibration vorgesehen.

Der im Folgenden beschriebene, mehrstufige Kalibrationsprozess wird in einer Kalibrationshalle 16 über einen Umweg der extrinsischen Referenz-Koordinatensystem 7 zu Fahrzeug-Koordinatensystem-Kalibration realisiert, weshalb das Referenzsensorsystem 1 für diesen Kalibrationsschritt auf das Fahrzeug 2 montiert wird bzw. ist.

Besonders bevorzugt können die Positionsmarker 11 mittels eines externen Kamerasystems 14 umfassend mehrere externe Kameras 15 erkannt werden. Beispielsweise kann das externe Kamerasystem 14 in der Halle 16 montiert bzw. angeordnet sein. Besonders bevorzugt handelt es sich bei dem externen Kamerasystem 14 um ein 3D-Kamerasystem.

Positionsmarker 11, welche von dem externen Kamerasystem 14 präzise erkannt werden, sind auf der Hinterachse 12 bzw. der Radnabe des Fahrzeugs 2 montiert, wobei die Hinterachse 12 bzw. die Radnabe dem Fahrzeug-Koordinatensystem 8 entspricht, sowie auf den Kalibrierobjekten 9 angebracht. Durch den zentralen LIDAR 5` wird die relative Position des zentralen LIDAR 5' zu dem Kalibrierobjekt 9 erkannt. Das externe Kamerasystem 14 bestimmt die Position der Kalibrierobjekte 9 zu dem Fahrzeug-Koordinatensystem 8. Hierdurch ist es möglich, die Rotations- und/oder Translationsmatrix für die extrinsische Kalibration Referenzsensorsystem 1 zu Fahrzeug 2 durchzuführen.

Mit Hilfe einer internen Kalibrationsroutine des Positionssystems 6 wird die Rotationsmatrix zwischen dem Positionssystem 6 und der Hinterachse 12, also dem Fahrzeug-Koordinatensystem 8, bestimmt.

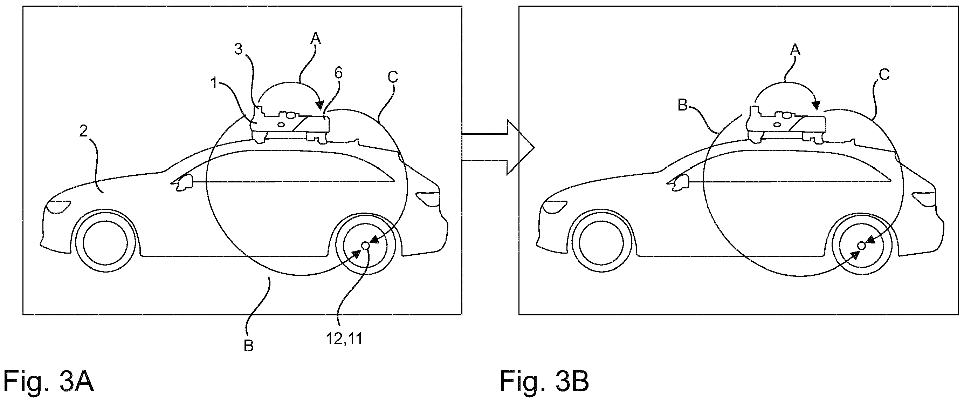

In der Figur 3A ist das beschriebene Verfahren zur Kalibrierung des Referenzsensorsystems 2 bildlich dargestellt.

Pfeil A zeigt den Verfahrensschritt b), welcher lediglich durch einen Umweg, dargestellt durch die Pfeile B und C, durchgeführt werden kann.

Pfeil B entspricht dabei dem Erkennen der Positionsmarker 11 auf der Hinterachse 12, so dass die Position der Hinterachse 12 und dementsprechend dem Fahrzeug-Koordinatensystem 8 zu dem Referenz-Koordinatensystem bekannt ist.

Pfeil C entspricht dem Schritt des Verfahrens mit einer internen Kalibrationsroutine des Positionssystems 6, wodurch die Rotationsmatrix zwischen dem Positionssystem 6 und der Hinterachse 12, also dem Fahrzeug-Koordinatensystem 8, bestimmt wird.

Dadurch wird das Referenzsensorsystem 1 kalibriert, das heißt, dass alle Sensoren 3, 6 auf das Referenz-Koordinatensystem 7 kalibriert sind.

In der Figur 3B ist die Verwendung des kalibrierten Referenzsensorsystems 1 dargestellt, wobei das kalibrierte Referenzsensorsystem 1 auf einem beliebigen Fahrzeug 2 montiert ist. Dadurch, dass das Fahrzeug-Koordinatensystem 8 sich verändert hat, ist eine Kalibration des Fahrzeug-Koordinatensystem 8 zu dem Referenz-Koordinatensystem 7 notwendig.

Es ist nun gemäß Figur 3B der Pfeil A bekannt, da das Referenzsensorsystem 1 kalibriert ist. Weiterhin ist Pfeil C bekannt, durch die interne Kalibrationsroutine des Positionssystems 6, wodurch die Rotationsmatrix bekannt wird. Die Translationsmatrix kann durch eine einfache Messung des dreidimensionalen Abstands zwischen dem Positionssystem 6 und der Hinterachse 12 ermittelt werden.

Durch die Kenntnis von Pfeil A und Pfeil C kann auf den nun noch erforderlichen Pfeil B rückgeschlossen werden, so dass eine Kalibration in der Kalibrationshalle 16 entfallen kann.

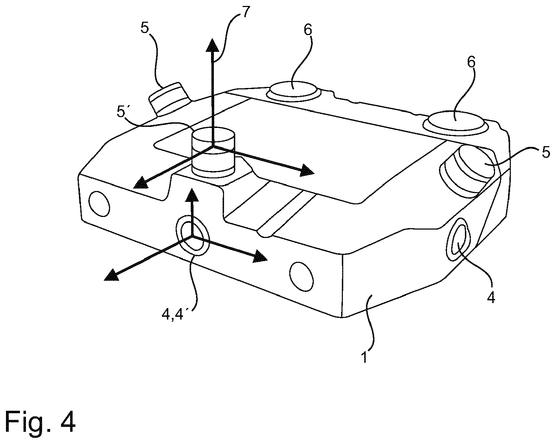

In der Figur 4 wird das Referenzsensorsystem 1 in einer perspektivischen Darstellung gezeigt.

Das Referenzsensorsystem umfasst mehrere optische Sensoren 3, welche einerseits als LIDAR-Sensoren 5, 5' und Kameras 4 ausgebildet sind. Weiter ist ein Positionssystem 6 mit mindestens einem Positionssensor 6 dargestellt. Der LIDAR 5`, auch als zentraler LIDAR 5' bezeichnet, definiert das Referenz-Koordinatensystem 7. Die weiteren LIDAR-Sensoren 5 werden als seitliche LIDAR-Sensoren bezeichnet.

Jeder Sensor 4, 5 weist ein eigenes Koordinatensystem auf, welches auf das Referenz-Koordinatensystem kalibriert ist. Beispielhaft ist das Koordinatensystem der vorderen bzw. zentralen Kamera 4' dargestellt.

Es versteht sich, dass es sich bei den vorstehend erläuterten Ausführungsformen lediglich um eine erste Ausgestaltung der erfindungsgemäßen Vorrichtung handelt. Insofern beschränkt sich die Ausgestaltung der Erfindung nicht auf diese Ausführungsbeispiele.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Referenzsensorsystem
- 2: Fahrzeug
- 3: optischer Sensor
- 4: Kamera
- 5: LIDAR
- 5`: zentraler LIDAR
- 6: Positionssystem, Positionssensor
- 7: Referenz-Koordinatensystem
- 8: Fahrzeug-Koordinatensystem
- 9: externen Kalibrierobjekt
- 10: Kalibriermuster
- 11: Positionsmarker
- 12: Hinterachse
- 13: Winkel, Winkelversatz
- 14: externes Kamerasystem
- 15: externe Kamera
- 16: Kalibrationshalle
- 17: Tisch

## Patentansprüche

1. Verfahren zur Kalibrierung eines portablen Referenzsensorsystems mit optischen Sensoren und zumindest einen Positionssensor, umfassend die Verfahrensschritte
a) Kalibration der optischen Sensoren des Referenzsensorsystems auf ein vorbestimmtes Referenz-Koordinatensystem durch Bestimmen einer Rotations-und/oder Translationsmatrix jedes Sensors, so dass ein Koordinatensystem jedes Sensors zu dem Referenz-Koordinatensystem kalibriert ist, wobei durch ein Erkennen von externen Kalibrierobjekten die jeweiligen Rotations-und/oder Translationsmatrizen bestimmt werden;
b) Kalibration des Positionssensors auf das Referenz-Koordinatensystem durch Erkennen von Positionsmarkern, wodurch eine Kalibration eines Koordinatensystems des Positionssensors zu einem Fahrzeug-Koordinatensystem durchgeführt wird durch Bestimmung einer Rotations- und/oder Translationsmatrix.

2. Verfahren nach Anspruch 1, wobei beim Schritt der Kalibration der optischen Sensoren das Referenzsensorsystem durch Translationsbewegungen und/oder Rotationsbewegungen relativ zu den Kalibrierobjekten bewegt wird, so dass die Kalibrierobjekte durch die optischen Sensoren erkannt werden können.

3. Verfahren nach Anspruch 2, wobei für jedes erkanntes Kalibrierobjekt jeweils ein Normalenvektor des Kalibrierobjekts erzeugt wird, wodurch die jeweilige Rotations-und/oder Translationsmatrix erzeugt wird.

4. Verfahren nach einem der Ansprüche 1 bis 3, wobei nach der Kalibration der optischen Sensoren und vor der Kalibration des Positionssensors das Referenzsensorsystem auf ein Fahrzeug montiert wird.

5. Verfahren nach Anspruch 4, wobei beim Schritt des Kalibrierens des Positionssensors Positionsmarker auf den Kalibrierobjekten und einer Hinterachse des Fahrzeugs erkannt werden, und wobei die Position der Kalibrierobjekte zu dem Referenzsensorsystem bestimmt wird, wodurch die Position der Kalibrierobjekte zu der Hinterachse bestimmt wird, wodurch die Rotations- und/oder Translationsmatrix des Referenzsensorsystems zu dem Fahrzeug-Koordinatensystem bestimmt wird.

6. Kalibriertes Referenzsensorsystem, welches mittels eines Verfahrens nach einem der Ansprüche 1 bis 5 kalibriert ist.

7. Verwendung eines kalibrierten Referenzsensorsystems nach Anspruch 6 mit einem beliebigen Fahrzeug.

8. Verwendung nach Anspruch 7, wobei das kalibrierte Referenzsensorsystem auf dem beliebigen Fahrzeug angebracht wird und wobei nach Anbringung des Referenzsensorsystems mittels des Positionssensors eine Rotationsmatrix des Positionssensors zu einer Hinterachse des beliebigen Fahrzeugs bestimmt wird und die Translationsmatrix des Positionssensors zu der Hinterachse des beliebigen Fahrzeugs gemessen wird.

9. Verwendung nach Anspruch 7 oder Anspruch 8, wobei die Verwendung des Referenzsensorsystems unabhängig von externen Kalibrierobjekten und Positionsmarkern ist.
